(19) Europäisches Patentamt
European Patent Office
Office européen des brevets

(11) **EP 1 315 028 B1**

(12) **EUROPEAN PATENT SPECIFICATION**

(45) Date of publication and mention
of the grant of the patent:
**05.11.2008 Bulletin 2008/45**

(51) Int Cl.:
***H04N 9/31*** (2006.01)     ***H04N 5/74*** (2006.01)
***G03B 21/16*** (2006.01)     ***G02B 5/04*** (2006.01)
***G02B 9/18*** (2006.01)

(21) Application number: **01958538.9**

(22) Date of filing: **27.08.2001**

(86) International application number:
**PCT/JP2001/007342**

(87) International publication number:
**WO 2002/019027 (07.03.2002 Gazette 2002/10)**

(54) **PROJECTION VIDEO DEVICE**

VIDEOPROJEKTIONSGERÄT

DISPOSITIF VIDEO DE PROJECTION

(84) Designated Contracting States:
**DE GB**

(30) Priority: **28.08.2000 JP 2000256916**

(43) Date of publication of application:
**28.05.2003 Bulletin 2003/22**

(73) Proprietor: **MATSUSHITA ELECTRIC INDUSTRIAL CO., LTD.**
**Kadoma-shi, Osaka 571-8501 (JP)**

(72) Inventors:
• **TABUCHI, Toshiaki**
**Okayama-shi, Okayama 704-8117 (JP)**
• **SANNOHE, Shinya**
**Neyagawa-shi, Osaka 572-0806 (JP)**

(74) Representative: **Holmes, Miles Keeton et al**
**Novagraaf International S.A.**
**25, avenue du Pailly**
**1220 Les Avanchets,**
**Geneva (CH)**

(56) References cited:
**JP-A- 4 350 623      JP-A- 5 232 432**
**JP-A- 5 264 947      JP-A- 9 096 867**
**JP-A- 11 282 361     JP-A- 2000 206 451**

**Description**

TECHNICAL FIELD

The present invention relates to a projection-type imaging device, and specifically the present invention relates to a cooling structure used in the projection-type imaging device. The document JP 04 350 623 discloses a projection-type imaging device reflecting the preamble of present claim 1.

BACKGROUND ART

Recently, as digital apparatuses represented by a personal computer are coming into wide use, projection-type imaging devices, which can project an image created by such a digital apparatus onto a screen, are entering the marketplace for the purpose of presentations and the like. In the projection-type imaging device, light from a light source is modulated by an image display element for displaying the image created by the digital apparatus, and the modulated light is magnified and projected by a projection optical system.

As the digital apparatuses are high-powered, images created by the digital apparatuses have high resolution. Thus, the projection-type imaging device is required to include an image display element having higher resolution. Further, a light source of the projection-type imaging device is required to have high luminance so as to realize a bright image on the projection screen.

The image display element of the projection-type imaging device is irradiated with light from the light source. Accordingly, by providing a light source having high luminance, the image display element is irradiated with more intense light. In the case of a transmission-type image display element, a temperature thereof rises significantly when the element is irradiated with intense light. Therefore, a high-luminance projection-type imaging device uses a reflection-type image display element. Even in the reflection-type image display element, a temperature thereof rises due to some light absorption when the element is irradiated with intense light. Accordingly, provision of a structure for forcibly cooling the image display element is required.

Further, by making the image display element have high resolution, the amount of heat that the image display element itself generates becomes great. Accordingly, in order to make a high-resolution and high-luminance projection-type imaging device, a structure for efficiently cooling the image display element is required.

Light from the light source is incident on the reflection-type image display element via a prism, and the light is reflected by a display surface of the reflection-type image display element and is again incident on the prism. Therefore, by providing the high-luminance projection-type imaging device, a temperature of the prism is increased. Thus, in order to make the high-luminance projection-type imaging device, a structure for efficiently cooling the prism is required.

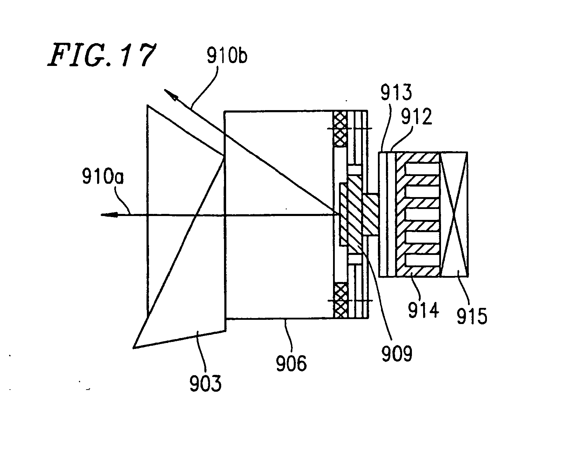

Figure **17** illustrates a structure for cooling an image display element **909** of a conventional projection-type imaging device. It should be noted that in Figure **17**, one of the three primary color components of light from a light source is focused, and therefore only the image display element **909** associated with the single primary color component is shown. The image display element **909** is a reflection-type image display element of a micromirror type. A plurality of micromirrors are placed on a display surface of the image display element **909**. An angle of each micromirror is changed according to a control signal representing a prescribed image, so that an image is displayed on the display surface of the image display element **909**.

The image display element **909** is joined to an electronic cooling element **912** via a holder **913**. For example, the electronic cooling element **912** is formed of a semiconductor.

The electronic cooling element **912** is joined to a heat sink **914** and a cooling fan **915** for cooling the heat sink **914**.

Light from a light source (not shown) is incident on the image display element **909** via a TIR prism **903** and a color separation/color combining prism **906**. Light reflected by the image display element **909** is directed in a direction indicated by arrows **910a** or **910b** according to an angle of the micromirror. Light directed in the direction indicated by arrow **910a** (light **910a**) carries information on an image displayed on the display surface of the image display element **909**. The light **910a** is transmitted by the color separation/color combining prism **906** and the TIR prism **903**, and thereafter the light **910a** is projected onto a screen by a projection optical system (not shown).

The image display element **909** is cooled by the holder **913**, the electronic cooling element **912**, the heat sink **914** and the cooling fan **915**.

Light directed in the direction indicated by arrow **910b** is not used for projection onto the screen, and therefore is referred herein to as "extraneous light". The extraneous light **910b** is guided by the color separation/color combining prism **906** so as not to be incident on the TIR prism **903**, and exits the color separation/color combining prism **906**. If the extraneous light **910b** is incident on the TIR prism **903**, contrast in the image projected onto the screen is lowered, thereby deteriorating image quality. The extraneous light **910b** is absorbed in a location (not shown) which is irradiated with the extraneous light **910b**.

Another example of the cooling structure of the reflection-type image display element is shown in Japanese Laid-Open Publication No. 10-319853. In the example shown in Japanese Laid-Open Publication No. 10-319853, an image display element is joined to a metal plate having high thermal conductivity, thereby increasing an area of image display element surfaces from which heat is radiated. The metal plate is cooled via natural convection.

Still another example of the cooling structure of the reflection-type image display element is shown in Japanese Laid-Open Publication No. 10-319379. In the example shown in Japanese Laid-Open Publication No. 10-319379, cooling fans are provided on the front and rear surfaces of an image display element so as to generate air convention for cooling. Japanese Laid-Open Publication No. 10-319379 also discloses a configuration in which heat of the image display element is conducted to radiation fins by a heat pipe and the radiation fins are cooled by a cooling fan.

In the conventional configuration shown in Figure **17**, a cooling fan **915** is provided to the image display element **909**. In order to enhance the cooling efficiency of the image display element **909**, the volume of air generated by the cooling fan **915** must be increased by increasing the number of rotations of the cooling fan **915** or by making the cooling fan **915** larger. However, in the configuration shown in Figure **17**, vibrations of the cooling fan **915**, which are inevitably increased by an increase in air volume, are directly transferred to the micromirrors included in the image display element **909**, deteriorating quality of an image displayed on the image display element **909**. Consequently, quality of the image projected onto the screen is deteriorated. In particular, when the image display element **909** having high resolution is used, such deterioration in image quality is significant. The vibrations generated in the cooling fan **915** also reduce precision in the alignment of the image display element **909** with respect to the color separation/color combining prism **906**, so that quality of an image projected onto the screen is deteriorated.

Therefore, according to the conventional configuration shown in Figure **17**, the image display element **909** cannot be efficiently cooled.

Further, in the configuration shown in Figure **17**, the color separation/color combining prism **906** is responsible for a function of guiding the extraneous light **910b** so as not to be incident on the TIR prism **903**. Thus, the color separation/color combining prism **906** cannot be made compact.

In the cooling structure disclosed in Japanese Laid-Open Publication No. 10-319853, no cooling fan for cooling the image display element is used, and thus no problem related to deterioration in image quality due to vibrations of such a fan as described above occurs. However, cooling by natural convection does not sufficiently cool the image display element and therefore cannot be applied to a high-resolution projection-type imaging device.

In the cooling structure disclosed in Japanese Laid-Open Publication No. 10-319379, the image display element is cooled by air. Since the thermal conductivity of air is low, efficient cooling cannot be provided. Further, in such a configuration where heat of the image display element is conducted to the radiation fins by the heat pipe, there is a difficulty in adjusting a position of the image display element with respect to the prism because of the high rigidity and heavy weight of the heat pipe, thereby reducing precision in alignment. In order to make the heat pipe less rigid and lighter, the heat pipe is required to be thinner. However, if the heat pipe is made thinner, the amount of heat that the thin heat pipe conducts in a unit of time becomes less, whereby the image display element cannot be efficiently cooled.

Further, none of the above-described publications related to conventional technologies refers to cooling of a prism itself (e.g., the color separation/color combining prism **906** shown in Figure **17**). There is a problem that when a temperature of the prism is increased, dimensions of the prism vary due to thermal expansion and precision in the optical system is reduced, thereby deteriorating quality of an image projected onto the screen.

Other examples are known from JP 2000 206451 or JP 11 282 361.

The present invention is made in view of the above-described problems. An objective of the present invention is to provide a projection-type imaging device in which a prism can be compact. Another objective of the present invention is to provide a projection-type imaging device in which a reflection-type image display element can be efficiently cooled. Still another objective of the present invention is to provide a projection-type imaging device in which the prism can be efficiently cooled.

DISCLOSURE OF THE INVENTION

A projection-type imaging device of the present invention is defined in the appended claims and includes: a light source optical system for emitting source light; an image display element having a display surface on which a plurality of micromirrors are placed, the image display element driving the plurality of micromirrors according to a control signal representing a prescribed image so as to reflect the source light incident on the display surface toward a first direction and a second direction differing from the first direction so as to obtain first light and second light, respectively; a prism for transmitting the first light and the second light; a projection optical system for projecting the first light transmitted by the prism; an absorption section for absorbing the second light transmitted by the prism; and a cooling section for cooling the absorption section by a liquid refrigerant, the first light carries information on the prescribed image, the liquid refrigerant is optically coupled to the prism, and the second light reaches the absorption section via the liquid refrigerant, and therefore the above described objective is achieved.

The projection-type imaging device may further include a plurality of image display elements corresponding to respective ones of a plurality of primary color components, and the prism may separate the source light into the plurality of primary color components and combine the first light for each of the primary color components.

The cooling section may include a radiator for radiating heat of the liquid refrigerant into the air around the projection-type imaging device.

The cooling section may further include a pump for circulating the liquid refrigerant through the absorption section and the radiator, and a pipeline forming a circulation path of the liquid refrigerant.

Fins may be formed on a surface of the radiator, which is in contact with the air around the projection-type imaging device, and the cooling section may further include a cooling fan for stirring the air around the radiator so as to enhance radiation effectiveness.

A circulation flow rate of the liquid refrigerant may be variably controlled according to a temperature around the projection-type imaging device.

The liquid refrigerant may be optically coupled to the prism via transparent glass and a transparent adhesive.

The absorption section may be formed of a metal material.

The absorption section may have a surface for absorbing the second light, and the surface for absorbing the second light may be black.

The absorption section may have a surface in contact with the liquid refrigerant and fins may be formed on the surface in contact with the liquid refrigerant.

An index of refraction of the liquid refrigerant may be substantially equal to an index of refraction of the prism.

Another projection-type imaging device of the present invention includes: a light source optical system for emitting source light; an image display element having a display surface on which a prescribed image is displayed according to a control signal, the light source being reflected by the display surface so as to obtain information light which carries information on the prescribed image; a prism for transmitting the information light; a projection optical system for projecting the information light transmitted by the prism; and a cooling section for cooling the prism by a liquid refrigerant, and therefore the above described objective is achieved.

The projection-type imaging device may include a plurality of image display elements corresponding to respective ones of a plurality of primary color components, and the prism may separate the source light into the plurality of primary color components and combine the information light for each of the primary color components.

The cooling section may include a radiator for radiating heat of the liquid refrigerant into the air around the projection-type imaging device.

The cooling section may further include a pump for circulating the liquid refrigerant through the absorption section and the radiator, and a pipeline forming a circulation path of the liquid refrigerant.

Fins may be formed on a surface of the radiator, which is in contact with the air around the projection-type imaging device, and the cooling section may further include a cooling fan for stirring the air around the radiator so as to enhance radiation effectiveness.

A circulation flow rate of the liquid refrigerant may be variably controlled according to a temperature around the projection-type imaging device.

Still another projection-type imaging device of the present invention includes: a light source optical system for emitting source light; an image display element having a display surface on which a prescribed image is displayed according to a control signal, the light source being reflected by the display surface so as to obtain information light which carries information on the prescribed image; a prism for transmitting the information light; a projection optical system for projecting the information light transmitted by the prism; and an element cooling section for cooling a surface of the image display element opposed to the display surface by a liquid refrigerant, and therefore the above described objective is achieved.

The projection-type imaging device may include a plurality of image display elements corresponding to respective ones of a plurality of primary color components, and the prism may separate the source light into the plurality of primary color components and combine the information light for each of the primary color components.

The element cooling section may further cool surroundings of the display surface of the image display element.

The liquid refrigerant may be optically coupled to the display surface of the image display element and the prism, and the element cooling section may further cool the display surface of the image display element with the liquid refrigerant.

The element cooling section may include a pump for circulating the liquid refrigerant, a pipeline forming a circulation path of the liquid refrigerant, and a radiator for radiating heat of the liquid refrigerant into the air around the projection-type imaging device.

The circulation flow rate of the liquid refrigerant may be variably controlled according to a temperature around the projection-type imaging device.

The element cooling section may be formed of a metal material.

The element cooling section may have a surface in contact with the liquid refrigerant and fins may be formed on the surface in contact with the liquid refrigerant.

An index of refraction of the liquid refrigerant may be substantially equal to an index of refraction of the prism.

A portion of the element cooling section, which is in contact with the display surface of the image display element, may be formed of an elastic material.

BRIEF DESCRIPTION OF THE DRAWINGS

Figure **1** is a view showing an optical system of a projection-type imaging device **1000** according to an embodiment of the present invention.

Figure **2** is a view showing a cooling structure **1010** of the projection-type imaging device **1000** according to an embodiment of the present invention.

Figure **3A** is a view showing a display surface **127** of an image display element **7b**.

Figure **3B** is a view showing how source light **122** is reflected by the display surface **127** of the image display element **7b** (Figure **3A**).

Figure **4** is an exploded perspective view showing how a prism cooling device **19**, a first element cooling device **21**, and a second element cooling device **26** are mounted on a top face of a color separation/color combining prism **6**, a back face of the image display element **7b**, and the circumference of the display surface of the image display element **7b**, respectively.

Figure **5** is a view showing a state where the prism cooling device **19** is placed on the top face of the color separation/color combining prism **6**.

Figure **6A** is a view showing a bottom face of the prism cooling device **19**.

Figure **6B** is a cross-sectional view of the prism cooling device **19** taken along line A-B shown in Figure **6A**.

Figure **7A** is an exploded perspective view showing how the first element cooling device **21** is mounted on a back face **128** of the image display element **7b**.

Figure **7B** is a cross-sectional view of the first element cooling device **21**.

Figure **8A** is an exploded perspective view showing how a first element cooling device **21a** is mounted on a back face of the image display element **7b**.

Figure **8B** is a cross-sectional view of the first element cooling device **21a**.

Figure 8C is a cross-sectional view of a first element cooling device 21b.

Figure **9A** is an exploded perspective view showing how the second element cooling device **26** is mounted on the circumference of the display surface **127** of the image display element **7b**.

Figure **9B** is a cross-sectional view of the second element cooling device **26**.

Figure **10** is a cross-sectional view of a second element cooling device **26a**.

Figure **11** is a diagram showing cooling performance data for the cooling structure **1010** (Figure **2**) according to an embodiment of the present invention.

Figure **12** is a view showing a cooling structure **1020** according to a variation of an embodiment of the present invention.

Figure **13A** is a cross-sectional view showing an example of a configuration of an air chamber **43**.

Figure **13B** is a view showing a state of a liquid refrigerant **20** in the case where the air chamber **43** is positioned in a slanted manner.

Figure **14A** is a cross-sectional view showing an example of a configuration of an air chamber **43a**.

Figure **14B** is a view showing a state of the air chamber **43a** positioned in a manner differing from the manner shown in Figure **14A**.

Figure **15** is a view showing a cooling structure **1030** according to a variation of an embodiment of the present invention.

Figure **16** is a diagram showing cooling performance data for a prism heat sink **50** and a heat sink fan **51** both shown in Figure **15**.

Figure **17** is a view showing a structure for cooling an image display element **909** of a conventional projection-type imaging device.

BEST MODE FOR CARRYING OUT THE INVENTION

Hereinafter, embodiments of the present invention will be described with reference to the drawings. It should be noted that similar components are denoted by similar reference numerals and there are some cases where repeated descriptions are omitted.

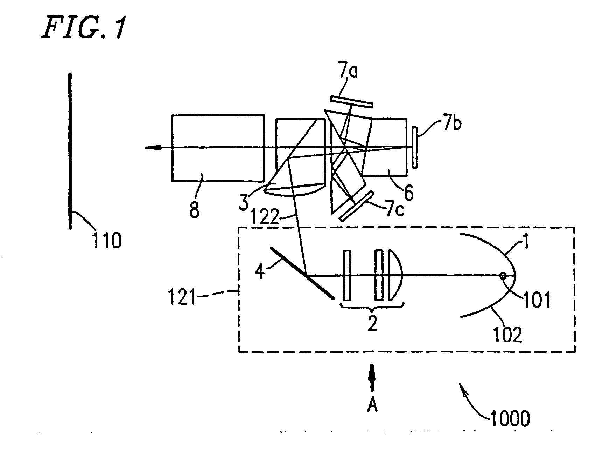

Figure **1** illustrates an optical system of a projection-type imaging device **1000** according to an embodiment of the present invention. The projection-type imaging device **1000** includes a light source optical system **121**, image display elements **7a-7c**, a TIR (Total Inner Reflecting) prism **3**, a color separation/color combining prism **6** (a prism), and a projection lens unit (projection optical system) **8**.

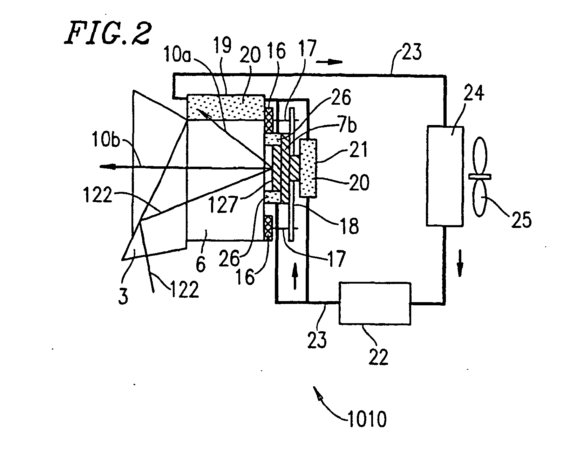

It should be noted that Figure **1** does not illustrate structures for cooling the color separation/color combining prism **6** and the image display elements **7a-7c** included in the projection-type imaging device **1000**. These cooling structures are described below with reference to Figure **2**.

The light source optical system **121** emits source light **122**. The "source light" described herein refers to light which is not modulated by an image display element (i.e., light which does not carry information on an image displayed on the image display element).

The light source optical system **121** includes a light source lamp unit **1**, a relay lens unit **2** for collecting light (source light) from the light source lamp unit **1**, and a light introducing mirror **4** for causing the light collected by the relay lens unit **2** to be incident on the TIR prism **3**. The light source lamp unit **1** includes a lamp **101** and a concave mirror **102** for allowing efficient collection of light emitted by the lamp **101**. In the high-resolution projection-type imaging device **1000**, for example, a xenon lamp is used as the lamp **101**.

For the purpose of description, Figure **1** shows the optical system such that geometric relationships therein are different from actual geometric relationships. For example, in the actual optical system of the projection-type imaging device **1000**, the source light **122** is incident on the TIR prism **3** from the back of the sheet of the drawing.

The TIR prism **3** is formed of two prisms. At an interface between the two prisms, an extremely thin air layer (not shown) is formed. The source light **122** incident on the TIR prism **3** is incident on the prism interface at an angle greater than the critical angle, and thus undergoes total internal reflection and is guided to the color separation/color combining prism **6**.

A dichroic film is formed on a prism end surface of the color separation/color combining prism **6**. For example, the source light **122** is white light. The source light **122** is separated into three primary color components (e.g., red, blue and green primary color components) by the color separation/color combining prism **6**. Each of the primary color components is reflected by a corresponding one of display surfaces of the image display elements **7a-7c**. The light reflected by the corresponding display surface is modulated according to an image displayed on the corresponding one of the display surfaces of the image display elements **7a-7c**. That is, the reflected light is information light (first light) carrying information on an image.

Information light for each of the primary color components is combined with information light for the other primary color components by the color separation/color combining prism **6**. After the combined information light is transmitted by the color separation/color combining prism **6**, the light is transmitted by the TIR prism **3**, and is magnified by the projection optical system **8** so as to be projected onto a screen **110**.

Each of the image display elements **7a-7c** is a reflection-type image display element. For example, each of the image display elements **7a-7c** can be a reflection-type liquid crystal image display element. Alternatively, each of the image display elements **7a-7c** can be a micromirror-type image display element. Each of the reflection-type liquid crystal image display element and the micromirror-type image display element is an example of the reflection-type image display element.

Figure **2** illustrates a cooling structure **1010** of the projection-type imaging device **1000** according to an embodiment of the present invention. Figure **2** shows the TIR prism **3** and the color separation/color combining prism **6** viewed from a direction indicated by arrow **A** in Figure **1**. The top surface of the sheet of Figure **2** corresponds to the front side of the sheet of Figure **1**. In Figure **2**, the image display elements **7a** and **7c** among the image display elements **7a-7c** shown in Figure **1** are omitted. Optical paths associated with the image display elements **7a** and **7c** are also omitted. Although separation of the source light **122** into respective primary color components corresponding to the image display elements **7a-7c** and combining of information light obtained by each of the image display elements **7a-7c** are performed by the color separation/color combining prism **6**, Figure **2** does not illustrate the state of the separation and combining.

In this example, each of the image display elements **7a-7c** is a micromirror-type image display element. The following description related to the image display element **7b** is also applied to the image display elements **7a** and **7c**.

The image display element **7b** is attached to a mounting board **18**. The mounting board **18** is fixed on the color separation/color combining prism **6** by an adjustment shaft holder **16** joined to the color separation/color combining prism **6** and an adjustment shaft **17** provided on the adjustment shaft holder **16**. The mounting board **18** and the image display element **7b** are fixed by an adhesive after their relative positions are adjusted with precision. This positional adjustment is performed using a specialized device (not shown).

The source light **122** is incident on the image display element **7b** via the TIR prism **3** and the color separation/ color combining prism **6**.

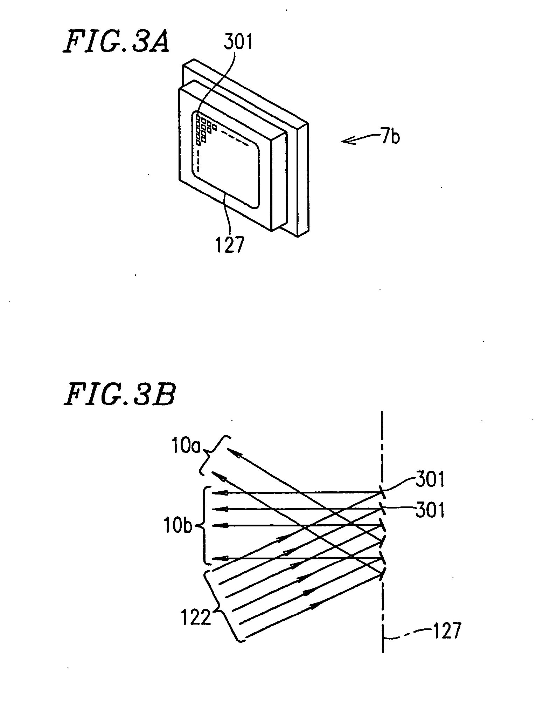

Figure **3A** illustrates a display surface **127** of the image display element **7b**. A plurality of micromirrors **301** are placed on the display surface **127**. Each micromirror **301** is driven according to a control signal input to the image display element **7b**. This control signal represents a prescribed image (an image for a primary color component corresponding to the image display element **7b** among images intended to be projected onto the screen **110**).

As a micromirror-type image display element as shown in Figure **3A**, for example, a DMD (Digital Mirror Device) element and a TMA (Thin film Micromirror Array) element have been commercialized or made public.

Figure **3B** illustrates how the source light **122** is reflected by the display surface **127** of the image display element **7b** (Figure **3A**). In the example shown in Figure **3B**, the image display element **7b** is a DMD element. In the DMD element, each micromirror **301** (a picture element) is driven according to a control signal such that an angle thereof is +10° or -10°. It should be noted that +10° and -10° each refer to an angle of each micromirror **301** with respect to the display surface **127**.

Where -10° and +10° are respectively represented by "ON" and "OFF", light reflected by the micromirror **301** corresponding to "ON" forms information light **10b** and light reflected by the micromirror **301** corresponding to "OFF" forms extraneous light **10a**. In this manner, the image display element **7b** reflects the source light **122** incident on the display surface **127** via the TIR prism **3** (Figure **2**) and the color separation/color combining prism **6** toward a first direction **10b** and a second direction **10a** differing from the first direction **10b** so as to obtain first light (information light) and second light (extraneous light), respectively. The information light **10b** is modulated by the image display element **7b**, i.e., it carries information on a prescribed image represented by a control signal input to the image display element **7b**.

As an example of the projection-type imaging device using a DMD element as the image display element, a DLP (Digital Light Processing) system has been commercialized.

Referring again to Figure **2**, the cooling structure **1010** according to an embodiment of the present invention is described.

The color separation/color combining prism **6** transmits the information light **10b** and the extraneous light **10a**. The information light **10b** transmitted by the color separation/color combining prism **6** is further transmitted by the TIR prism **3** so as to be projected onto the screen **110** by the projection optical system **8** (Figure 1).

A prism cooling device **19** for cooling the color separation/color combining prism **6** by a liquid refrigerant **20** is fixed on a top face of the color separation/color combining prism **6** by an adhesive or the like. It should be noted that the "top face" of the color separation/color combining prism **6** refers to a surface located uppermost among surfaces of the color separation/color combining prism **6** in Figure **2**.

A first element cooling device **21** is fixed on a surface (back face) opposite to the display surface **127** of the image display element **7b** by an adhesive, screws or the like, so as to cool the surface by the liquid refrigerant **20**. Further, a second element cooling device **26** for cooling the periphery of the display surface **127** of the image display element **7b** by the liquid refrigerant **20** is fixed on the circumference of the display surface **127** by an adhesive so as to be in close contact with the image display element **7b**.

The liquid refrigerant **20** is circulated through the prism cooling device **19** and the first and second element cooling devices **21** and **26** by a pump **22**. A circulation path of the liquid refrigerant **20** is formed by a pipeline tube **23** (pipeline). A circulation flow rate of the liquid refrigerant **20** is suitably determined according to cooling conditions of the color separation/color combining prism **6** and the image display element **7b**.

The liquid refrigerant **20**, which passed through the prism cooling device **19** and the first and second element cooling devices **21** and **26**, is guided into a radiator **24** so as to exchange heat with air. In this manner, the heat of the liquid refrigerant **20** is radiated into ambient air.

Fins can be formed on a surface of the radiator **24** which is in contact with the ambient air. Further, the projection-type imaging device is optionally provided with a cooling fan **25** so as to forcibly cool the radiator **24** by air. The cooling fan **25** enhances efficiency in heat radiation by stirring the air around the radiator **24**.

In this manner, the prism cooling device **19**, the pump **22**, the pipeline tube **23** and the radiator **24** function together as a cooling section for cooling the color separation/color combining prism **6** by the liquid refrigerant **20**. Further, the first element cooling device **21**, the pump **22**, the pipeline tube **23** and the radiator **24** function together as a cooling section for cooling the surface of the image display element **7b** opposite to the display surface **127** by the liquid refrigerant **20**.

In the prism cooling device **19**, the liquid refrigerant **20** is in direct contact with the color separation/color combining prism **6**. The liquid refrigerant **20** is transparent and the extraneous light **10a** from the color separation/color combining prism **6** is transmitted by the liquid refrigerant **20**. The liquid refrigerant **20** is optically coupled to the color separation/color combining prism **6**. It should be noted that the wording "media A and B are optically coupled to each other" used herein means that the media A and B are positioned without having an air layer between the media A and B such that light can be transmitted from the media A to the media B or vice versa.

The extraneous light **10a** strikes an inner wall of the prism cooling device **19** so as to be absorbed therein. Accordingly, the prism cooling device **19** functions as the cooling section for cooling the color separation/color combining prism **6** by the liquid refrigerant **20** and at the same time it functions as an absorption section for absorbing the extraneous light **10a**. Since the liquid refrigerant **20** has a function of guiding the extraneous light **10a** to the absorption section, the color separation/color combining prism **6** is not required to have a configuration for guiding the extraneous light **10a** to the absorption section, whereby the color separation/color combining prism **6** can be made compact. This feature is made apparent by comparing the conventional color separation/color combining prism **906** shown in Figure **17** to the color separation/color combining prism **6** of the projection-type imaging device **1000** according to the present invention shown in Figure **2**. A height (a length in a direction from the top to bottom of the plane of the sheet of Figure **2**) of the color separation/color combining prism **6** can be reduced to about a half of that (a length in a direction from the top to bottom of the plane the sheet of Figure **17**) of the conventional color separation/color combining prism **906**. The color separation/color combining prism **6** is an extremely highly precise optical element and is therefore costly. Therefore, by making the color separation/color combining prism **6** compact, reduction in production cost of the projection-type imaging device **1000** is possible.

When the prism cooling device **19** functions as the absorption section for absorbing the extraneous light **10a**, the pump **22**, the pipeline tube **23** and the radiator **24** function as a cooling section for cooling the absorption section by liquid refrigerant **20**.

It is desirable that an index of refraction of the liquid refrigerant **20** is substantially equal to an index of refraction (n = approximately 1.5) of the color separation/color combining prism **6**. Since the color separation/color combining prism **6** and the liquid refrigerant **20** are optically coupled to each other, total internal reflection does not occur at the interface between the color separation/color combining prism **6** and the liquid refrigerant **20** when the indices of refraction of the liquid refrigerant **20** and the color separation/color combining prism **6** are equal. Therefore, the extraneous light **10a** is incident on the liquid refrigerant **20** inside the prism cooling device **19** and strikes the inner wall of the prism cooling device **19** so as to be absorbed therein. Consequently, the extraneous light **10a** is not reflected by the interface between the color separation/color combining prism **6** and the liquid refrigerant **20** and thus is not transmitted by the color separation/color combining prism **6** so as to be incident on the TIR prism **3**. Therefore, such extraneous light **10a** does not deteriorate contrast in an image projected onto the screen **110** (Figure 1).

When BK7 is used as a glass material of the color separation/color combining prism **6**, the refractive index of the color separation/color combining prism **6** is 1.5. In this case, a mixed liquid of ethylene glycol (55%), diethylene glycol (30%), and glycerin (15%) can be preferably used as the liquid refrigerant **20**. A refractive index of this mixed liquid is 1.44 and is substantially equal to the refractive index of the color separation/color combining prism **6**. In this example, a total internal reflection angle at the interface between the color separation/color combining prism **6** and the liquid refrigerant **20** is equal to or more than 70 degrees, so that contrast in an image projected onto the screen **110** (Figure 1) is reduced to such an extent as not to be recognized, causing no problem for practical use.

It should be noted that the wording "the indices of refraction of the color separation/color combining prism **6** and the liquid refrigerant **20** are substantially equal to each other" means that their indices of refraction are entirely equal to each other or there is a slight difference between them but the extraneous light **10a** reflected at the interface between the color separation/color combining prism **6** and the liquid refrigerant **20** due to the difference is little, so that contrast in the image projected onto the screen **110** (Figure 1) is reduced to such an extent as not to be recognized.

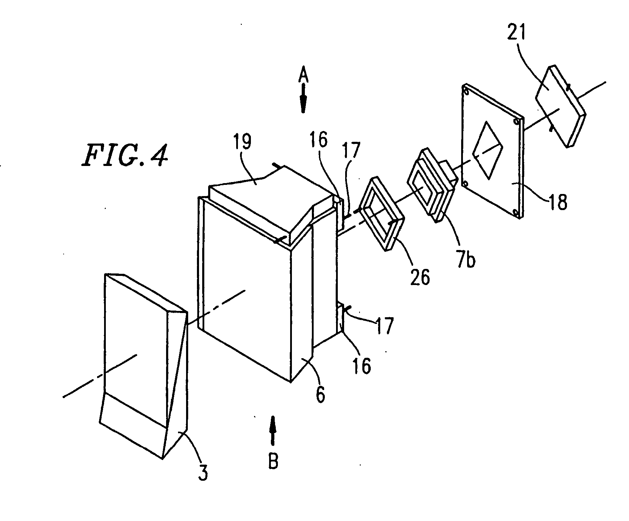

Figure **4** is an exploded perspective view showing how the prism cooling device **19**, the first element cooling device **21**, and the second element cooling device **26** are mounted on a top face of the color separation/color combining prism **6**, a back face of the image display element **7b**, and the circumference of the display surface of the image display element **7b**, respectively. In Figure **4**, the image display elements 7a and 7c shown in Figure 1 are also omitted. However, it should be understood that the first and second element cooling devices **21** and **26** are respectively mounted on the back face and circumference of the display surface of the image display element **7a** and also mounted on the image display element 7c in a similar manner to the first and second element cooling device **21** and **26** mounted on the image element display **7b** shown in Figure **4**.

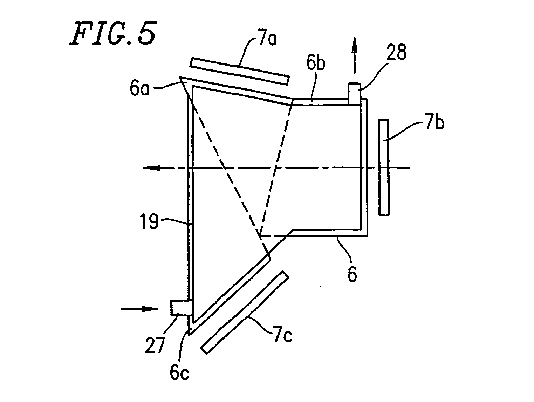

Figure 5 shows a state where the prism cooling device **19** is placed on the top face of the color separation/color combining prism **6**. Figure 5 is a view of the prism cooling device **19** and the color separation/color combining prism **6** viewed from a direction indicated by arrow A shown in Figure **4**.

Similar to the extraneous light **10a** from the image display element **7b** described above with reference to Figure 2, extraneous light from each of the image display elements **7a** and **7c** exits the top face of the color separation/color combining prism **6** along the direction of the front side of the sheet of Figure **5**. The prism cooling device **19** is provided so as to almost entirely cover the top face of the color separation/color combining prism **6**, which includes three prisms **6a-6c**, in order to absorb the extraneous light from each of the image display element **7a-7c**.

The prism cooling device **19** is provided with a refrigerant inlet **27** and a refrigerant outlet **28** for circulating the liquid refrigerant **20**. The refrigerant inlet **27** and the refrigerant outlet **28** are connected to the pipeline tube **23** (Figure **2**). In the example shown in Figure **5**, although the prism cooling device **19** is provided with the single refrigerant inlet **27** and the single refrigerant outlet **28**, the number of each of the refrigerant inlet **27** and the refrigerant outlet **28** is not limited to one.

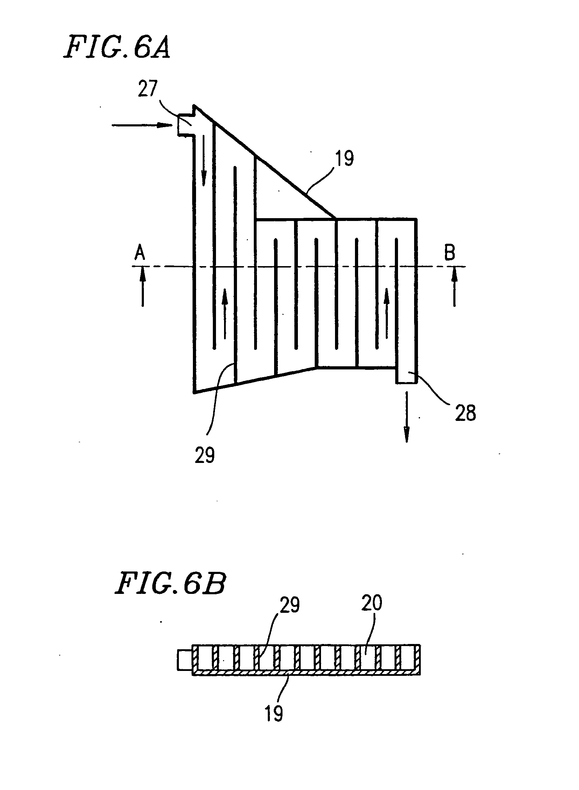

Figure **6A** shows a bottom face of the prism cooling device **19**. Figure **6A** is a view of the prism cooling device **19** viewed from a direction indicated by arrow **B** shown in Figure **4**.

For example, the prism cooling device **19** is formed of a metal material having superior thermal conductivity, such as aluminum or copper, and has a box-like hollow structure. As described above, the transparent liquid refrigerant **20** is enclosed between the hollow section of the prism cooling device **19** and the color separation/color combining prism **6**.

Since the prism cooling device **19** has a function as an absorption section for absorbing the extraneous light **10a** (Figure **2**), it is desirable that the inner wall of the prism cooling device **19** is black so as to absorb light. Alternatively, when the prism cooling device **19** is made of aluminum, it is desirable that a black oxide film is formed by black alumite treatment or the like so as to prevent erosion by the liquid refrigerant **20**.

A temperature of the inner wall of the prism cooling device **19** is increased by absorbing the extraneous light **10a**. The inner wall of the prism cooling device **19** is cooled by exchanging heat between the inner wall of the prism cooling device **19** and the liquid refrigerant **20**. In the prism cooling device **19**, the surface absorbing the extraneous **10a** is in direct contact with the liquid refrigerant **20**, and thus the heat is efficiently exchanged.

In general, heat exchange effectiveness depends on flow velocity of a refrigerant and heat exchange surface area. Therefore, in order to enhance the heat exchange effectiveness, it is preferable that an area of the inner wall of the prism cooling device **19**, which is in contact with the liquid refrigerant **20**, is as large as possible. Therefore, in the example shown in Figure **6A**, heat sink ribs (fins) **29** are formed on the inner walls of the prism cooling device **19**. The heat sink ribs **29** are alternately formed on one wall and an opposed wall so as to efficiently allow the liquid refrigerant **20** to flow from the refrigerant inlet **27** to the refrigerant outlet **28**.

Figure **6B** is a cross-sectional view of the prism cooling device **19** taken along line A-B shown in Figure **6A**.

In a preferred embodiment, a height (a dimension in a top to bottom direction in Figure **6B**) of the prism cooling device **19** is about 5 mm and a thickness of each heat sink rib **29** is between 0.5 mm and 1 mm. Ethylene glycol, propylene glycol or the like can be used as the liquid refrigerant **20**. When an extent of heat release in the prism cooling device **19** is about 30 W, a sufficient cooling effect can be realized with the flow rate of the liquid refrigerant **20** of about **50** cc/min.

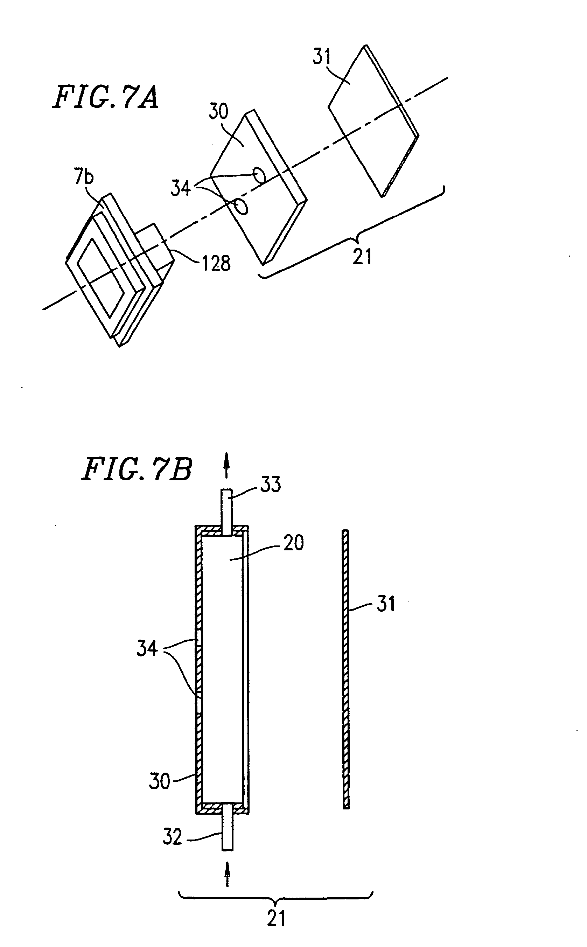

Figure **7A** is an exploded perspective view showing how the first element cooling device **21** is mounted on the back face **128** of the image display element **7b**.

Figure **7B** is a cross-sectional view of the first element cooling device **21**. The first element cooling device **21** includes a case **30** and a lid **31**. The case **30** is joined to the lid **31** by an adhesive or the like so as to be sealed. For example, the case **30** and lid **31** are formed of a metal material having high thermal conductivity, such as aluminum or copper, and form a box-like hollow structure when adhered together.

The case **30** is provided with a refrigerant inlet **32** and a refrigerant outlet **33** so as to circulate the liquid refrigerant **20**. Since heat is required to be conducted between the first element cooling device **21** and the image display element **7b**, the first element cooling device **21** is provided so as to be in close contact with the image display element **7b**. The case **30** is provided with fixation holes **34** through which screws or the like pass for closely fixing the first element cooling device **21** on the image display element **7b**. Alternatively, when the first element cooling device **21** is fixed on the image display element **7b** by an adhesive, the fixation holes **34** can be omitted.

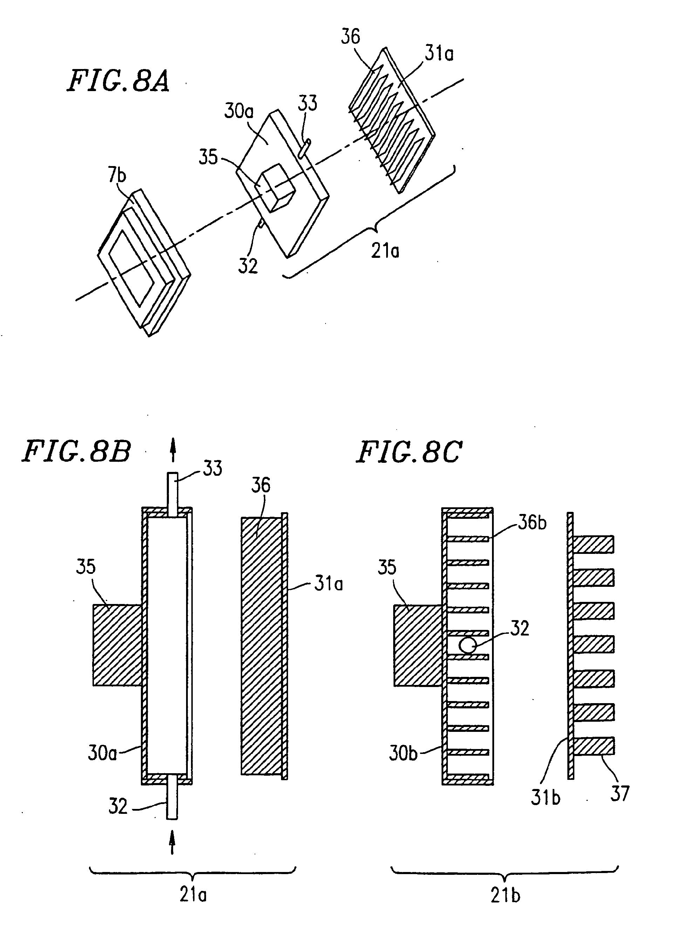

Figure **8A** is an exploded perspective view showing how a first element cooling device **21a** is mounted on the back face of the image display element **7b**. The first element cooling device **21a** can be used instead of the first element cooling device **21** described with reference to Figures **7A** and **7B**.

Figure **8B** is a cross-sectional view of the first element cooling device **21a**. The first element cooling device **21a** includes a case **30a** and a lid **31a**. The case **30a** is joined to the lid **31a** by an adhesive or the like so as to be sealed. For example, the case **30a** and lid **31a** are formed of a metal material having high thermal conductivity, such as aluminum or copper, and forms a box-like hollow structure when adhered together. The case **30** is provided with a refrigerant inlet **32** and a refrigerant outlet **33** so as to circulate the liquid refrigerant **20**. Further, the case **30a** is integrally formed with a heat conduction section **35** through which heat is conducted to or from the image display element **7b** (e.g., a DMD element).

The lid **31a** is provided with cooling ribs (fins) **36** at a surface in contact with the liquid refrigerant **20**. This allows efficient heat exchange between the liquid refrigerant **20** and the first element cooling device **21**.

Figure **8C** is a cross-sectional view of a first element cooling device **21b**. The first element cooling device **21b** can be used instead of the first element cooling device **21** described with reference to Figures **7A** and **7B**. The first element cooling device **21b** includes a case **30b** and a lid **31b**.

Thecase **30b** is provided with cooling ribs (fins) 36b at a surface in contact with the liquid refrigerant **20**. This allows efficient heat exchange between the liquid refrigerant **20** and the first element cooling device **21b**.

The lid **31b** is provided with air-cooling ribs (fins) **37** at a surface in contact with the ambient air. This allows efficient heat exchange between the air and the first element cooling device **21b**.

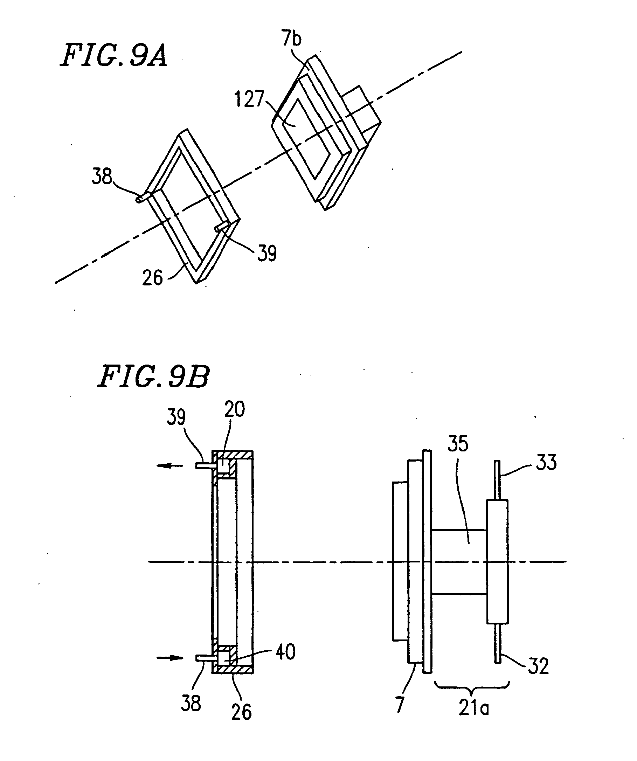

Figure **9A** is an exploded perspective view showing how the second element cooling device **26** is mounted on the circumference of the display surface **127** of the image display element 7b.

For example, the second element cooling device **26** is formed of a metal material having superior thermal conductivity, such as aluminum or copper.

Figure **9B** is a cross-sectional view of the second element cooling device **26**. It should be noted that Figure **9B** shows the image display element **7b** and the first element cooling device **21a** (Figures **8A** and **8B**) together with the second element cooling device **26**.

A hollow portion **40** having a form of a frame is provided in the second element cooling device **26**. The liquid refrigerant **20** is enclosed in the hollow portion **40**. The second element cooling device **26** is provided with a refrigerant inlet **38** and a refrigerant outlet **39**. Each of the refrigerant inlet **38** and refrigerant outlet **39** is connected to the pipeline tube **23** (Figure **2**).

The second cooling device **26** is closely attached to the image display element **7b** by an adhesive or the like. This facilitates heat conduction from the image display element **7b** to the second element cooling device **26**. In Figure **9B**, for the purpose of description, the second element cooling device **26** is shown as being separated from the image display element **7b**.

The heat from the image display element **7b** is conducted to the second element cooling device **26** and is further transferred (via heat exchange) to the liquid refrigerant **20**. As a result, the circumference of the display surface **127** of the image display element **7b** is cooled.

Ideally, only the display surface **127** of the image element **7b** is irradiated with the source light **122** (Figure **2**) incident on the image display element **7b** (when precision of the optical system is sufficiently high). However, when the precision of the optical system of the projection-type imaging device is not sufficiently high, the circumference of the display surface **127** of the image display element **7b** is irradiated with the source light **122**. This may increase a temperature of the circumference of the display surface **127** of the image display element **7b**.

The projection-type imaging device **1000** (Figure **1**) according to an embodiment of the present invention uses the second element cooling device **26**, whereby it is possible to suppress an increase in temperature of the circumference of the display surface **127**. Accordingly, an optical system (e.g., the light source optical system **121**, Figure 1) is not required to be highly precise, thereby reducing an overall production cost of the projection-type imaging device **1000**.

When dust in the air adheres to the surface of the color separation/color combining prism **6** and/or the display surface **127** of the image display element **7b**, an image of the dust is magnified and is projected onto the screen **110**, extremely deteriorating image quality. In the projection-type imaging device **1000** according to an embodiment of the present invention, the second element cooling device **26** is used for cooling the surroundings of the display surface **127**, and therefore it is not necessary to create air convection for air-cooling the surroundings of the display surface **127**. Further, as can be seen from Figure **2**, a space between the image display element **7b** and the color separation/color combining prism **6** is tightly enclosed by the second element cooling device **26**. Accordingly, the dust in the air can be prevented from sticking to the surface of the color separation/color combining prism **6** and/or the display surface **127** of the image display element **7b**, thereby preventing quality of an image projected onto the screen **110** from being deteriorated.

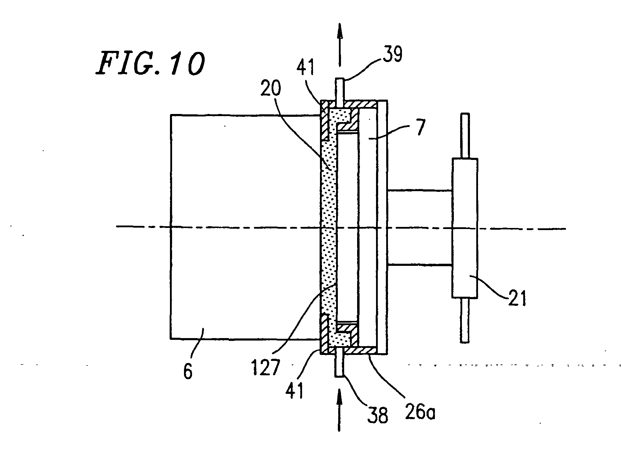

Figure **10** is a cross-sectional view of a second element cooling device **26a**. It should be noted that Figure **10** illustrates the color separation/color combining prism **6**, the image display element **7b** and the first cooling device **21** as well. The second element cooling device **26a** can be used instead of the second element cooling device **26** shown in Figures **9A** and **9B**.

Similar to the above-described second element cooling device **26**, the second element cooling device **26a** is joined to the image display element **7b**. The second element cooling device **26a** has a configuration in which a space between the color separation/color combining prism **6** and the display surface **127** of the image display element **7b** is filled with the liquid refrigerant **20**.

As a material of the element cooling device **26a**, aluminum or the like, which have good thermal conductivity, can be used. Alternatively, a portion **41** of the second element cooling device **26a**, which is in contact with the color separation/color combining prism **6**, can be made of an elastic material (e.g., elastic rubber). This enables adjustments of a positional relationship between the color separation/color combining prism **6** and the image display element **7b** while preventing leakage of the liquid refrigerant **20**. Further, a portion of the second element cooling device **26a**, which is in contact with the display surface **127** of the image display element **7b** (or a portion which is in contact with the circumference of the display surface **127** of the image display element **7b**), can be made of an elastic material.

The second element cooling device **26a** has a function of also cooling the color separation/color combining prism **6** using the liquid refrigerant **20** while cooling the display surface **127** of the image display element **7b**.

The liquid refrigerant **20** is optically coupled to the display surface **127** and the color separation/color combining prism **6**. Preferably, an index of refraction of the liquid refrigerant **20** is substantially equal to the index of refraction (n = approximately 1.5) of the color separation/color combining prism **6**. By making the index of refraction of the liquid refrigerant **20** substantially equal to the index of refraction of the color separation/color combining prism **6**, reflection at the interface between the liquid refrigerant **20** and the color separation/color combining prism **6** shown in Figure **10** can be prevented, thereby enhancing optical contrast. This enhances quality of an image projected onto the screen **110**.

As described above, a mixed liquid of ethylene glycol (55%), diethylene glycol (30%) and glycerin (15%) can be preferably used as the liquid refrigerant **20**.

In the second element cooling device **26a** shown in Figure **10**, a space between the image display element **7b** and the color separation/color combining prism **6** is filled with the liquid refrigerant **20**. Therefore, quality of an image projected onto the screen **110** is not deteriorated by dust in the air adhering to the surface of the color separation/color combining prism **6** and/or the display surface **127** of the image display element **7b**.

In this manner, with the cooling structure **1010** according to the embodiment of the present invention shown in Figure **2**, the image display element **7b** is cooled by both the first and second element cooling devices **21** and **26** using the liquid refrigerant. Since thermal conductivity of the liquid refrigerant **20** is considerably high as compared to thermal conductivity of the air, the image display element **7b** can be efficiently cooled.

Further, vibrations of a cooling fan is not conducted to the image display element **7b**, and thus quality of the image projected onto the screen **110** is not deteriorated.

The extraneous light **10a** from the image display element **7b** is absorbed in the prism cooling device **19** (an absorption section). The prism cooling device **19** can be efficiently cooled by the liquid refrigerant **20**.

The prism cooling device **19** also functions as a cooling section for efficiently cooling the color separation/color combining prism **6** by the liquid refrigerant **20**.

Needless to say, the above-described effects are applied to the image display elements **7a** and **7c** (Figure **1**).

It should be noted that Figure **2** shows an example in which the prism cooling device **19** and the first and second element cooling devices **21** and **26** are connected to one another via a common one-system circulation path. However, a separate circulation path can be provided to each of the prism cooling device **19** and the first and second element cooling devices **21** and **26**.

In such a case, a liquid refrigerant used in the respective circulation paths for the first and second element cooling devices **21** and **26** is not necessarily transparent. This is because the liquid refrigerants used in these circulation paths are not required to be optically coupled to the color separation/color combining prism **6** or the display surface **127** of the image display element **7b**.

Furthermore, it is not essential that all of the prism cooling device **19** and the first and second element cooling devices **21** and **26** are provided to the projection-type imaging device **1000**. Any one of the prism cooling device **19** and the first and second element cooling devices **21** and **26** can be solely used. For example, a combination of the prism cooling device **19** according to the embodiment of the present invention and the conventional image display element **7b** can be used.

The image display element **7b** is not necessarily a micromirror-type image display element. Any reflection-type image display element can be used as the image display element **7b**. However, when the image display element **7b** is not a micromirror-type image display element, the prism cooling device **19** does not function as the absorption section for absorbing the extraneous light **10a**. This is because the extraneous light **10a** is not created in such a case. Even when the prism cooling device **19** does not function as the absorption section for absorbing the extraneous light **10a,** the prism cooling device **19** can function as a cooling section for cooling a prism (color separation/color combining prism **6**) by the liquid refrigerant **20**. In this case, the liquid refrigerant **20** is not necessarily transparent.

The inventors of the present invention carried out an experiment for measuring cooling performance data (temperature data) for the purpose of verifying a cooling effect of the cooling structure **1010** according to the above-described embodiment of the present invention shown in Figure **2**.

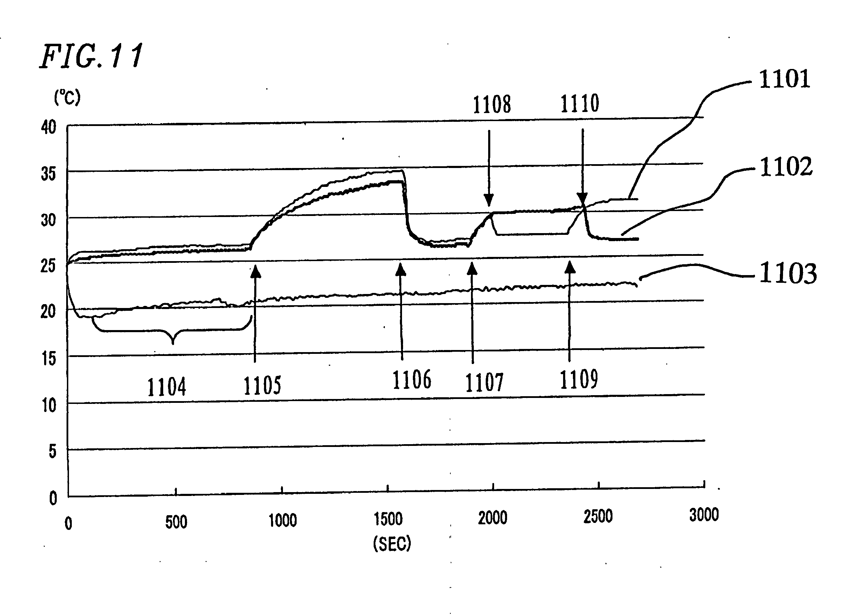

Figure **11** shows cooling performance data for the cooling structure **1010** (Figure **2**) according to the embodiment of the present invention. In Figure **11**, the horizontal axis denotes time elapsed since the start of the experiment, and the vertical axis denotes temperature. In Figure **11**, a thin line, reference numeral **1101** represents the temperature over time at a back face side of one of the image display elements **7a-7c** (Figure **1**), and a bold line, reference numeral **1102** represents the temperature over time at a display surface side of the image display element. For reference, Figure **11** also shows a room temperature (thin line, reference numeral **1103**) in the environment under which the experiment was carried out.

In the experiment, the liquid refrigerant **20** is circulated by pump **22** (Figure **2**) via the prism cooling device **19** and the first and second element cooling devices **21** and **26** and heat is radiated into the ambient air by the radiator **24**. The experimental conditions were as follows.

· The liquid refrigerant **20**: a water solution of ethylene glycol

· Circulation flow rate: 40-66 cc/min.

· Optical output from the light source lamp unit **1** (Figure 1): 6000 ANSI lumen-hours

As described below, the experiment is carried out by controlling the circulation of the liquid refrigerant **20**.

In a period **1104**, the liquid refrigerants **20** is circulated through the prism cooling device **19**, and the first and second element cooling devices **21** and **26**.

At a time point **1105**, circulation of the liquid refrigerant **20** through the prism cooling device **19**, and the first and second element cooling devices **21** and **26** is stopped.

At a time point **1106**, circulation of the liquid refrigerant **20** through the prism cooling device **19**, and the first and second element cooling devices **21** and **26** is restarted.

At a time point **1107**, circulation of the liquid refrigerant **20** through the prism cooling device **19**, and the first and second element cooling devices **21** and **26** is stopped.

At a time point **1108**, circulation of the liquid refrigerant **20** through only the first element cooling device **21** is restarted.

At a time point **1109**, circulation of the liquid refrigerant **20** through the first element cooling device **21** is stopped.

At a time point **1110**, circulation of the liquid refrigerant **20** through only the second element cooling device **26** is restarted.

As can be seen from Figure **11**, circulation of the liquid refrigerant **20** enhances the cooling effect. Furthermore, it is appreciated that a temperature of the image display element is stabilized by circulating the liquid refrigerant **20** through both the first and second element cooling devices **21** and **26**.

Comparing the temperature **1102** at the display surface side of the image display element between the time points **1105** and **1106** to the temperature **1102** at the display surface side of the image display element between the time points **1108** and **1109**, it is appreciated that the temperature at the display surface side of the image display element can be efficiently suppressed by only circulating the liquid refrigerant **20** in the first element cooling device **21**. Similarly, comparing the temperature **1101** at the back face side of the image display element between the time points **1105** and **1106** to the temperature **1101** at the back face of the image display element at the point **1110** or later, it is appreciated that the temperature at the back face side of the image display element can be efficiently suppressed by only circulating the liquid refrigerant **20** in the second element cooling device **26**.

In this manner, even when either the first element cooling device **21** or the second element cooling device **26** is solely used, the image display element can be efficiently cooled.

It is found that when the liquid refrigerant **20** is circulated in both the first and second element cooling devices **21** and **26**, respective temperatures at back face and display face sides of the image display element can be sufficiently suppressed as compared to a tolerance temperature of the image display element. Therefore, no problems are caused even if the optical output from the light source lamp unit **1** (Figure **1**) is increased.

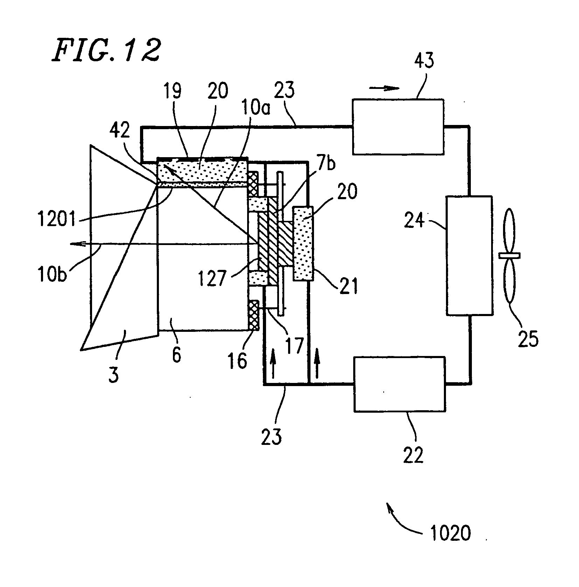

Figure **12** illustrates a cooling structure **1020** according to a variation of the embodiment of the present invention. The cooling structure **1020** can be used in the projection-type imaging device **1000** (Figure **1**) instead of the cooling structure **1010** (Figure **2**).

The cooling structure **1020** is different from the cooling structure **1010** in that transparent glass **42** is provided between the prism cooling device **19** and the color separation/color combining prism **6** and an air chamber **43** is provided so as to be connected to the pipeline tube **23**.

The transparent glass **42** is joined to the top face of the color separation/color combining prism **6** by a transparent adhesive **1201**. As described with reference to Figure **5**, the color separation/color combining prism **6** includes three prisms **6a-6c**. Therefore, there are slight differences in levels between the three prisms **6a-6c**. By providing the transparent glass **42** on the top face of the color separation/color combining prism **6**, even if there are slight differences in level on the surface, the junction of the prism cooling device **19** and the color separation/color combining prism **6** are facilitated.

In the cooling structure **1020**, the liquid refrigerant **20** is optically coupled to the color separation/color combining prism **6** via the transparent glass **42** and the transparent adhesive **1201**. Thus, the extraneous light **10a** can be guided through the liquid refrigerant **20** to the prism cooling device **19** (an absorption section).

The air chamber **43** is a device for trapping the air (air bubbles) coming into the circulation path of the liquid refrigerant **20** and storing it. When air comes into the circulation path, it becomes difficult to flow the liquid refrigerant **20** or heat exchange efficiency will be reduced.

It should be noted that the air chamber **43** can be provided as a liquid collection section used for replacement or replenishment of the liquid refrigerant **20**.

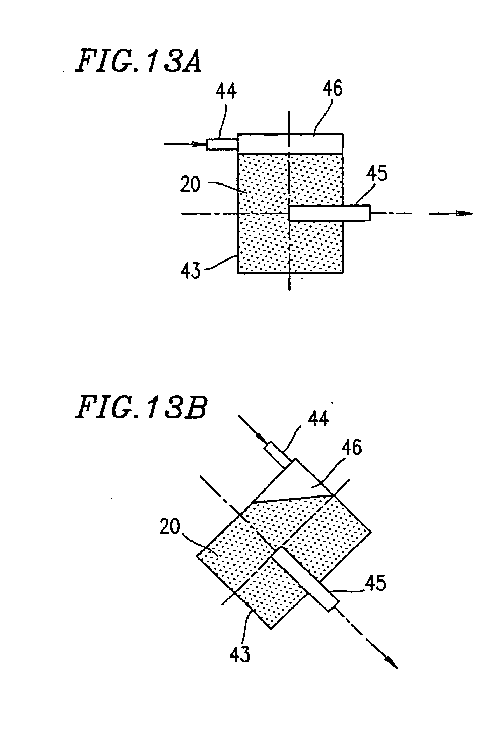

Figure **13A** is a cross-sectional view showing an example of a configuration of the air chamber **43**. The air chamber **43** is a liquid container having a box-like shape. The liquid refrigerant **20** is injected from a refrigerant inlet **44**, stored in the container of the air chamber **43**, and is guided from a refrigerant outlet **45** into the radiator **24** (Figure **12**). Figure **13A** shows a state of the liquid refrigerant **20** in the case where the projection-type imaging device **1000** (Figure **1**) is positioned on a horizontal plane.

When the liquid refrigerant **20** includes air **46**, the air **46** stays in an upper part of the air chamber **43** due to buoyancy thereof. Since the refrigerant outlet **45** is positioned at about the middle of the air chamber **43** in a height direction (in a top to bottom direction in Figure **13A**), the air **46** does not come out from the refrigerant outlet **45** (i.e., the air **46** is not reintroduced into the circulation path of the liquid refrigerant **20**). Even if the air chamber **43** is placed upside down from the state shown in Figure **13A**, it is apparent that the same effect can be achieved.

Figure **13B** shows a state of the liquid refrigerant **20** in the case where the air chamber **43** is positioned in a slanted manner. Such a state can be provided, for example, when the projection-type imaging device **1000** is placed on an inclined plane. In the state shown in Figure **13B**, the air **46** also stays in the upper part of the air chamber **43** (a direction opposite to that along which gravity works).

In this manner, by providing the air chamber **43**, the air **46** is prevented from coming into the circulation path of the liquid refrigerant **20** regardless of an installation direction of the projection-type imaging device **1000**. Therefore, satisfactory flow of the liquid refrigerant **20** is secured and heat exchange efficiency can be prevented from being reduced.

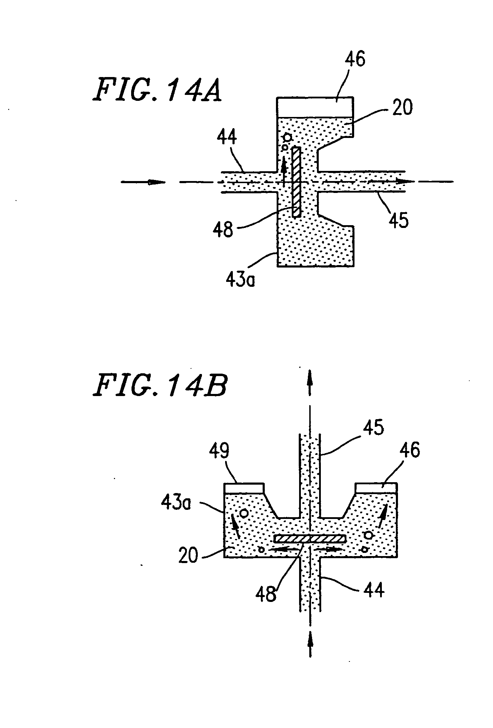

Figure **14A** is a cross-sectional view showing an example of a configuration of an air chamber **43a**. The air chamber **43a** can be used in the cooling structure **1020** (Figure **12**) instead of the air chamber **43** shown in Figures **13A** and **13B**.

The air chamber **43a** has a cylindrical shape. An air stopper **48** is fixed in the air chamber **43a** by a support member (not shown). In Figure **14A**, the liquid refrigerant **20** flows from the refrigerant inlet **44** as indicated by an arrow. When the air **46** becomes mixed with the liquid refrigerant **20**, the air **46** hits the air stopper **48** and then moves so as to stay in an upper part of an air chamber **47** due to buoyancy thereof. Therefore, the air **46** does not come out from the refrigerant outlet **45** (i.e., the air **46** is not reintroduced into the circulation path of the liquid refrigerant **20**).

Figure **14B** shows a state of the air chamber 43aplaced in a manner differing from the manner shown in Figure **14A**. The underside in Figure **14B** corresponds to the left side in Figure **14A**.

In Figure **14B**, the liquid refrigerant **20** flows from the refrigerant inlet **44** as indicated by an arrow. When the air **46** becomes mixed with the liquid refrigerant **20**, the air **46** hits the air stopper **48** and then moves so as to stay in a protrusion portion **49** of the air chamber **47** due to buoyancy thereof. Therefore, the air **46** does not come out from the refrigerant outlet **45** (i.e., the air **46** is not reintroduced into the circulation path of the liquid refrigerant **20**).

With the air chamber **43a**, the air **46** can be prevented from coming into the circulation path of the liquid refrigerant **20** regardless of the installation direction of the projection-type imaging device **1000**. Therefore, satisfactory flow of the liquid refrigerant **20** is secured and heat exchange efficiency can be prevented from being reduced.

It should be noted that in Figure **12**, the air chamber **43** can be provided between the radiator **24** and the pump **22**. The air chamber **43** is preferably provided before (at an upstream side of) the pump **22**.

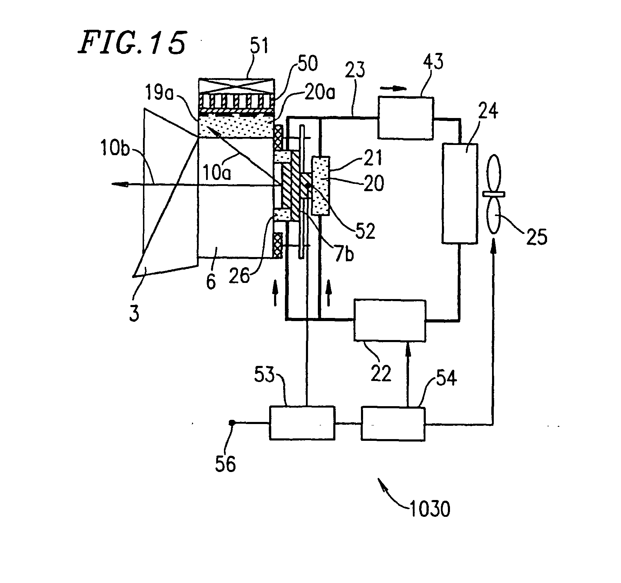

Figure **15** shows a cooling structure **1030** according to a variation of the embodiment of the present invention. The cooling structure **1030** can be used in the projection-type imaging device **1000** (Figure **1**) of the present invention instead of the cooling structure **1010** (Figure **2**).

The cooling structure **1030** is different from the cooling structure **1010** in that the liquid refrigerant in the prism cooling device is not circulated and the cooling fan **25** is controlled according to a temperature in the vicinity of the image display element **7b**.

In the cooling structure **1030**, a prism cooling device **19a** is provided instead of the prism cooling device **19** of the cooling structure **1010**. The prism cooling device **19a** is filled with a liquid refrigerant **20a**. Since the prism cooling device **19a** is not connected to the pipeline tube **23**, the liquid refrigerant **20a** is not circulated.

A prism heat sink (fins) **50** is formed on a top face of the prism cooling device **19a** as a radiator for radiating heat from the liquid refrigerant **20a** into the ambient air. A heat sink fan **51** is further placed on top of the prism heat sink **50**. The heat sink fan **51** has a function of enhancing heat radiation efficiency by stirring the air around the prism heat sink **50**.

The liquid refrigerant **20a** is transparent and is optically coupled to the color separation/color combining prism **6**. Therefore, the prism cooling device **19a** can function as an absorption section for absorbing the extraneous light **10a.** Furthermore, the prism cooling device **19a** function as a cooling section for cooling the absorption section by the refrigerant **20a** and also functions as a cooling section for cooling the color separation/color combining prism **6** by the liquid refrigerant **20a**.

Needless to say, the extraneous light **10a** is not created when the image display element **7b** is not a micromirror-type image display element, and thus the prism cooling device **19a** does not function as an absorption section for absorbing the extraneous light **10a**. In this case, the prism cooling device **19a** still functions as the cooling section for cooling the color separation/color combining prism **6** by the liquid refrigerant **20a**.

In general, the liquid refrigerant having an index of refraction which is completely equal to an index of refraction of the glass has high viscosity. Therefore, in order to circulate the liquid refrigerant, a high powered pump is required. However, in the cooling structure **1030**, the liquid refrigerant **20a** is not required to be circulated. Therefore, in the cooling structure **1030**, the liquid refrigerant **20a** having an index of refraction which is completely equal to an index of refraction of the glass can be used without enhancing performance of the pump **22** so as to circulate the liquid refrigerant having high viscosity.

Temperature detectors **52** and **56** respectively detect a temperature in the vicinity of the image display element **7b** and a temperature around the projection-type imaging device **1000**. Output from the temperature detectors **52** and **56** are input to a control circuit **53**.

The control circuit **53** instructs a drive circuit **54**, based on the temperature in the vicinity of the image display element **7b** and the temperature around the projection-type imaging device **1000**, by means of a signal representing a suitable flow rate of the liquid refrigerant **20** and a signal representing whether or not the cooling fan **25** should be operated.

The drive circuit **54** drives the pump **22** based on these signals.

In the radiator **24**, the quantity (SI unit system) of heat exchanged between the liquid refrigerant **20** and a surface (e.g., an inner surface of the radiator **24**) which is in contact with the liquid refrigerant **20** is given by (Expression 1).

$$Q = V*\rho*Cp*\Delta T \ ..... \ (Expression \ 1),$$

where
Q: quantity of heat to be exchanged [W],
V: a flow rate of the liquid refrigerant **20** [m$^3$/s],
p: density of the liquid refrigerant **20** [Kg/m$^3$],
Cp: specific heat of the liquid refrigerant 20 [KJ/Kg·°C], and
$\Delta T$ : a temperature difference (°C).

In the case where the liquid refrigerant **20** is water, Cp = 4.18.

In this manner, the quantity of heat to be exchanged depends on flow rate V of the liquid refrigerant **20**.

In the cooling structure **1030**, a circulation flow rate of the liquid refrigerant **20** is variably controlled according to an ambient temperature. For example, when the ambient temperature is low, the circulation flow rate of the liquid refrigerant **20** is controlled so as to be low, and when the ambient temperature is high, the circulation flow rate of the liquid refrigerant **20** is controlled so as to be high. This allows the temperatures of the reflection-type image display element **7** and/or the color separation/color combining prism **6** to be optimally controlled.

Alternatively, whether the cooling fan **25** is operated or stopped can be controlled according to the ambient temperature. When the ambient temperature is low, the number of rotations of each of the cooling fan **25** and pump **22** can be lowered, thereby lowering the noise of the projection-type imaging device **1000**.

The inventors of the present invention carried out an experiment for measuring cooling performance data (temperature data) for the purpose of verifying effectiveness of the prism heat sink **50** and heat sink fan **51** of the cooling structure **1030** according to the embodiment of the present invention shown in Figure **15**.

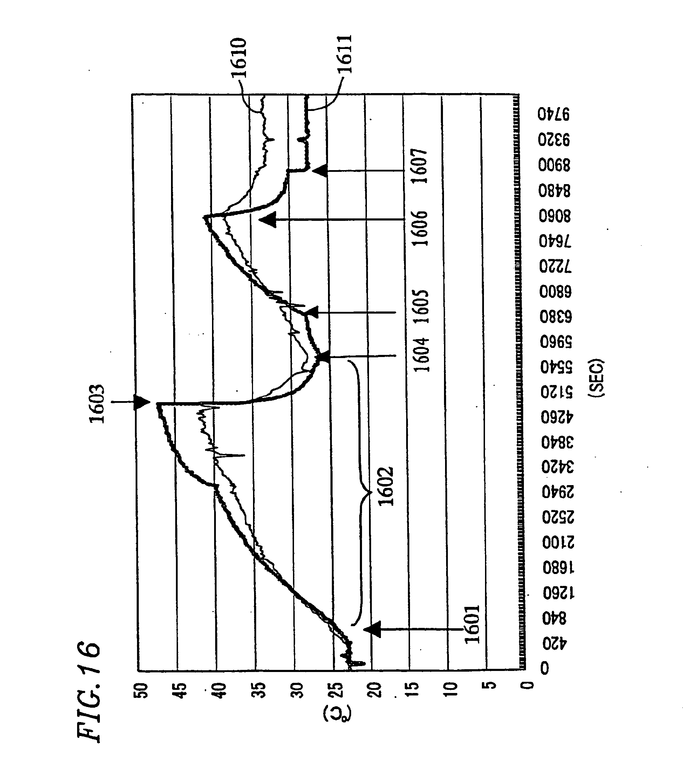

Figure **16** shows cooling performance data for the prism heat sink **50** and the heat sink fan **51** both shown in Figure **15**. This experiment was carried out on the cooling structure **1020** shown in Figure **12** in which the prism heat sink **50** and the heat sink fan **51** are placed on the prism cooling device **19**. In Figure **16**, the horizontal axis denotes elapsed time and the vertical axis denotes temperature. In Figure **16**, a thin line, reference numeral **1610** represents the temperature overtime at the top of the color separation/color combining prism **6**, and a bold line, reference numeral **1611** represents the temperature overtime at the top of the prism cooling device **19**. The experimental conditions were as follows.

• Liquid refrigerant **20**: a water solution of ethylene glycol
• Circulation flow rate: about 100 cc/min.
• Optical output of the light source lamp unit **1** (Figure **1**): 3000 ANSI lumen-hours

Initially, the xenon lamp **101** (Figure **1**) was lit up (time point **1601**) in the state where the prism heat sink **50** and the heat sink fan **51** were not placed on the prism cooling device **19** and the liquid refrigerant **20** was not circulated. In this state, the temperature **1610** at the top of the color separation/color combining prism **6** and the temperature **1611** at the top of the prism cooling device **19** were rapidly increased (period **1602**). At a time point **1603**, in order to prevent breakage of the projection-type imaging device, the xenon lamp **101** was turned off and the projection-type imaging device was naturally cooled.

At a time point **1604**, the xenon lamp **101** was lit up with the prism heat sink **50** and the heat sink fan **51** placed on the prism cooling device **19**, and the heat sink fan **51** was operated. At this point, the liquid refrigerant **20** was not circulated.

At a time point **1605**, the operation of the heat sink fan **51** was stopped.

At a time point **1606,** the heat sink fan **51** was operated. It is appreciated that the operation of the heat sink fan **51** causes rapid reduction in the temperature **1610** at the top of the color separation/color combining prism **6** and the temperature **1611** at the top of the prism cooling device **19**.

At a time point **1607**, the liquid refrigerant **20** was circulated.

From Figure 16, it is appreciated that by operating the heat sink fan **51**, the color separation/color combining prism **6** and the prism cooling device **19** can be efficiently cooled. Further, it is appreciated that in the cooling structure **1020** shown in Figure 12, by circulating the liquid refrigerant **20**, the color separation/color combining prism **6** and the prism cooling device **19** can be further efficiently cooled.

From Figures **11** and **16**, it is appreciated that according to the present invention, the image display elements **7a-7c** and the color separation/color combining prism **6** can be efficiently cooled, and no problem is caused by enhancing optical output of the light source lamp unit **1**.

It goes without saying that in the above-described embodiments and variations thereof, a cooling structure of a projection-type imaging device can be formed by suitably combining components shown in the different drawings. For example, providing the air chamber **43** shown in Figure 12 to the cooling structure **1010** (Figure **2**) or the cooling structure **1030** (Figure **15**) or providing the temperature detectors **52** and **56**, the control circuit **53** and the drive circuit **54** shown in Figure **15** to the cooling structure **1010** (Figure **2**) or the cooling structure **1020** (Figure **12**) are within the scope of the present invention.

INDUSTRIAL APPLICABILITY

As described above, the projection-type imaging device of the present invention includes the absorption section for absorbing extraneous light (second light) which is reflected by the display surface of the micromirror-type image display element and is transmitted by the prism. This absorption section is cooled by the liquid refrigerant. Since the liquid refrigerant has high cooling effectiveness as compared to air, the absorption section can be efficiently cooled.

Further, the extraneous light reaches the absorption section via the liquid refrigerant optically coupled to the prism. Therefore, the prism does not require a configuration for guiding the extraneous light to the absorption section, and thus the prism can be made compact.

Furthermore, the projection-type imaging device of the present invention includes the cooling section for cooling the prism, which transmits information light reflected by the display surface of the reflection-type image display element, by the liquid refrigerant. Since the liquid refrigerant has high cooling effectiveness as compared to air, the prism can be efficiently cooled.

Further still, the projection-type imaging device of the present invention includes the cooling section for cooling a surface of the reflection-type image display element opposed to the display surface by the liquid refrigerant. Since the liquid refrigerant has high cooling effectiveness as compared to air, the image display element can be efficiently cooled.

**Claims**

**1.** A projection-type imaging device comprising:

a light source optical system (121) for emitting source light;
an image display element (7a, 7b, 7c) having a display surface (127) on which a plurality of micromirrors are placed, the image display element driving the plurality of micromirrors according to a control signal representing a prescribed image so as to reflect the source light incident on the display surface toward a first direction and a second direction differing from the first direction so as to obtain first light (10b) and second light (10a), respectively;
a projection optical system (8) for projecting the first light, and
a cooling section (1010),

**characterised in that** the projection-type imaging device further comprises:

a prism (6) for transmitting the first light and the second light; and
an absorption section (19) for absorbing the second light transmitted by the prism;

wherein said projection optical system is arranged to project the first light (10b) transmitted by the prism (6);
said cooling section is arranged to cool the absorption section (19) by a liquid refrigerant (20),
the first light (10b) carries information on the prescribed image,
the liquid refrigerant (20) is optically coupled to the prism (6) **in that** the liquid refrigerant and the prism are positioned without having an air layer between the liquid refrigerant (20) and the prism (6) such that light can be transmitted between the liquid refrigerant and the prism, and
the second light (10a) reaches the absorption section (19) via the liquid refrigerant (20).

2. A projection-type imaging device according to claim 1,
   wherein the cooling section includes a radiator (24) for radiating heat of the liquid refrigerant into the air around the projection-type imaging device.

3. A projection-type imaging device according to claim 2,
   wherein the cooling section further includes a pump (22) for circulating the liquid refrigerant through the absorption section and the radiator, and a pipeline (23) forming a circulation path of the liquid refrigerant.

4. A projection-type imaging device according to claim 2,
   wherein fins (37) are formed on a surface of the radiator, which is in contact with the air around the projection-type imaging device, and the cooling section further includes a cooling fan (25) for stirring the air around the radiator so as to enhance radiation effectiveness.

5. A projection-type imaging device according to claim 1,
   wherein the liquid refrigerant is optically coupled to the prism via transparent glass and a transparent adhesive.

6. A projection-type imaging device according to claim 1,
   wherein the absorption section has a surface for absorbing the second light, the surface for absorbing the second light being black.

7. A projection-type imaging device comprising:

   a light source optical system (121) for emitting source light;
   an image display element (7a, 7b, 7c) having a display surface (127) on which a prescribed image is displayed according to a control signal, the light source being reflected by the display surface so as to obtain information light which carries information on the prescribed image;
   a projection optical system (8) for projecting the information light, and
   an element cooling section (1010) for cooling a surface (127) of the image display element opposed to the display surface by a liquid refrigerant (20),

   **characterised in that** the projection-type imaging device further comprises
   a prism (6) for transmitting the information light,
   wherein said projection optical system is arranged to project the information light transmitted by the prism (6); and
   wherein the liquid refrigerant (20) is optically coupled to the display surface of the image display element and the prism **in that** the liquid refrigerant, the display surface (127) and the prism (6) are positioned without having an air layer between the liquid refrigerant (20) and each of the display surface (127) and the prism (6) such that light can be transmitted between the liquid refrigerant and each of the display surface and the prism, and
   the element cooling section further cools the display surface of the image display element with the liquid refrigerant.

8. A projection-type imaging device according to claim 1 or 7, comprising a plurality of image display elements (7a-7c) corresponding to respective ones of a plurality of primary color components, wherein the prism separates the source light into the plurality of primary color components and combines the information light for each of the primary color components.

9. A projection-type imaging device according to claim 7,

wherein the element cooling section further cools surroundings of the display surface of the image display element.

10. A projection-type imaging device according to claim 7,
wherein the element cooling section includes a pump (22) for circulating the liquid refrigerant, a pipeline (23) forming a circulation path of the liquid refrigerant, and a radiator (24) for radiating heat of the liquid refrigerant into the air around the projection-type imaging device.

11. A projection-type imaging device according to claim 3 or 10, wherein the circulation flow rate of the liquid refrigerant is variably controlled according to a temperature around the projection-type imaging device.

12. A projection-type imaging device according to claim 1 or 7, wherein the element cooling section is formed of a metal material.

13. A projection-type imaging device according to claim 1 or 7, wherein the element cooling section has a surface in contact with the liquid refrigerant and fins (36) are formed on the surface in contact with the liquid refrigerant.

14. A projection-type imaging device according to claim 1 or 7, wherein an index of refraction of the liquid refrigerant is substantially equal to an index of refraction of the prism.

15. A projection-type imaging device according to claim 7,
wherein a portion of the element cooling section, which is in contact with the display surface of the image display element, is formed of an elastic material.


**Patentansprüche**

1. Bilderzeugungsvorrichtung des Projektionstyps, die umfasst:

ein optisches Lichtquellensystem (121), um Quellenlicht auszusenden;
ein Bildanzeigeelement (7a, 7b, 7c), das eine Anzeigeoberfläche (127) besitzt, auf der mehrere Mikrospiegel angeordnet sind, wobei das Bildanzeigeelement die mehreren Mikrospiegel in Übereinstimmung mit einem Steuersignal, das ein vorgeschriebenes Bild repräsentiert, ansteuert, um so das auf die Anzeigeoberfläche auftreffende Quellenlicht in eine erste Richtung und in eine von der ersten Richtung verschiedene zweite Richtung zu reflektieren, um so erstes Licht (10b) bzw. zweites Licht (10a) zu erhalten;
ein optisches Projektionssystem (8), um das erste Licht zu projizieren, und einen Kühlungsabschnitt (1010), **dadurch gekennzeichnet, dass** die Bilderzeugungsvorrichtung des Projektiontyps ferner umfasst:

ein Prisma (6), um das erste Licht und das zweite Licht zu übertragen; und
einen Absorptionsabschnitt (19), um das von dem Prisma übertragene zweite Licht zu absorbieren;

wobei das optische Projektionssystem dazu ausgelegt ist, das von dem Prisma (6) übertragene erste Licht (10b) zu projizieren;
wobei der Kühlungsabschnitt dazu ausgelegt ist, den Absorptionsabschnitt (19) durch ein flüssiges Kühlmittel (20) zu kühlen,
das erste Licht (10b) Informationen bezüglich eines vorgeschriebenen Bildes trägt,
das flüssige Kühlmittel (20) mit dem Prisma (6) optisch gekoppelt ist, indem das flüssige Kühlmittel und das Prisma so positioniert sind, dass sich zwischen dem flüssigen Kühlmittel (20) und dem Prisma (6) keine Luftschicht befindet, so dass Licht zwischen dem flüssigen Kühlmittel und dem Prisma übertragen werden kann, und
das zweite Licht (10a) den Absorptionsabschnitt (19) durch das flüssige Kühlmittel (20) erreicht.

2. Bilderzeugungsvorrichtung des Projektionstyps nach Anspruch 1, wobei der Kühlungsabschnitt einen Kühler (24) enthält, um Wärme des flüssigen Kühlmittels an die Luft, die die Bilderzeugungsvorrichtung des Projektionstyps umgibt, abzustrahlen.

3. Bilderzeugungsvorrichtung des Projektionstyps nach Anspruch 2, wobei der Kühlungsabschnitt ferner eine Pumpe (22), um das flüssige Kühlmittel durch den Absorptionsabschnitt und den Kühler zirkulieren zu lassen, und eine Pipeline (23), die einen Zirkulationsweg des flüssigen Kühlmittels bildet, enthält.

**4.** Bilderzeugungsvorrichtung des Projektionstyps nach Anspruch 2, wobei auf einer Oberfläche des Kühlers Kühlrippen (37) ausgebildet sind, die mit der Luft, die die Bildefzeugungsvorrichtung des Projektionstyps umgibt, in Kontakt sind, und der Kuhlungsabschnit ferner einen Kühlungslüfter (25) umfasst, um die Luft, die den Kühler umgibt, zu verwirbeln, um so den Abstrahlungswirkungsgrad zu verbessern.

**5.** Bilderzeugungsvorrichtung des Projektionstyps nach Anspruch 1, wobei das flüssige Kühlmittel mit dem Prisma über ein lichtdurchlässiges Glas und einen lichtdurchlässigen Klebstoff optisch gekoppelt ist.

**6.** Bilderzeugungsvorrichtung des Projektionstyps nach Anspruch 1, wobei der Absorptionsabschnitt eine Oberfläche besitzt, um das zweite Licht zu absorbieren, wobei die Oberfläche für die Absorption des zweiten Lichts schwarz ist.

**7.** Bilderzeugungsvorrichtung des Projektionstyps, die umfasst:

ein optisches Lichtquellensystem (121), um Quellenlicht auszusenden;
ein Bildanzeigeelement (7a, 7b, 7c), das eine Anzeigeoberfläche (127) besitzt, auf der ein vorgeschriebenes Bild in Übereinstimmung mit einem Steuersignal angezeigt wird, wobei das Quellenlicht durch die Anzeigeoberfläche reflektiert wird, um so Informationslicht zu erhalten, das Informationen bezüglich des vorgeschriebenen Bildes trägt;
ein optisches Projektionssystem (8), um das Informationslicht zu projizieren, und
einen Elementkühlungsabschnitt (1010), um eine Oberfläche (127) des Bildanzeigeelements gegenüber der Anzeigeoberfläche durch ein flüssiges Kühlmitel (20) zu kühlen,
**dadurch gekennzeichnet, dass** die Bilderzeugungsvorrichtung des Projektionstyps ferner umfasst:

ein Prisma (6), um das Informationslicht zu übertragen,
wobei das optische Projektionssystem dazu ausgelegt ist, das durch das Prisma (6) übertragene Informationslicht zu projizieren; und
wobei das flüssige Kühlmittel (20) mit der Anzeigeoberfläche des Bildanzeigeelements und mit dem Prisma optisch gekoppelt ist, indem das flüssige Kühlmittel, die Anzeigeoberfläche (127) und das Prisma (6) so positioniert sind, dass sich zwischen dem flüssigen Kühlmittel (20) und sowohl der Anzeigeoberfläche (127) als auch dem Prisma keine Luftschicht befindet, so dass Licht zwischen dem flüssigen Kühlmittel und sowohl der Anzeigeoberfläche als auch dem Prisma übertragen werden kann, und
der Elementkühlungsabschnitt ferner die Anzeigeoberfläche des Bildanzeigeelements mit dem flüssigen Kühlmittel kühlt.

**8.** Bilderzeugungsvorrichtung des Projektionstyps nach Anspruch 1 oder 7, die mehrere Bildanzeigeelemente (7a-7c) umfasst, die Entsprechenden von mehreren Primärfarbenkomponenten entsprechen, wobei das Prisma das Quellenlicht in mehrere Primärfarbenkomponenten trennt und das Informationslicht für jede der Primärfarbenkomponenten kombiniert.

**9.** Bilderzeugungsvorrichtung des Projektionstyps nach Anspruch 7, wobei der Elementkühlungsabschnitt ferner Umgebungen der Anzeigeoberfläche des Bildanzeigeelements kühlt.

**10.** Bilderzeugungsvorrichtung des Projektionstyps nach Anspruch 7, wobei der Elementkühlungsabschnitt eine Pumpe (22), um das flüssige Kühlmittel zirkulieren zu lassen, eine Pipeline (22), die einen Zirkulationsweg des flüssigen Kühlmittels bildet, und einen Kühler (24), um Wärme des flüssigen Kühlmittels an die Luft, die die Bilderzeugungsvorrichtung des Projektionstyps umgibt, abzustrahlen, umfasst.

**11.** Bilderzeugungsvorrichtung des Projektionstyps nach Anspruch 3 oder 10, wobei die Zirkulationsdurchflussmenge des flüssigen Kühlmittels in Übereinstimmung mit einer Temperatur in der Umgebung der Bilderzeugungsvorrichtung des Projektionstyps variabel gesteuert wird.

**12.** Bilderzeugungsvorrichtung des Projektionstyps nach Anspruch 1 oder 7, wobei der Elementkühlungsabschnitt aus einem Metallmaterial gebildet ist.

**13.** Bilderzeugungsvorrichtung des Projektionstyps nach Anspruch 1 oder 7, wobei der Elementkühlungsabschnitt eine Oberfläche besitzt, die mit dem flüssigen Kühlmittel in Kontakt ist, und an der Oberfläche, die mit dem flüssigen Kühlmittel in Kontakt ist, Kühlrippen (36) ausgebildet sind.

**14.** Bilderzeugungsvorrichtung des Projektionstyps nach Anspruch 1 oder 7, wobei ein Brechungsindex des flüssigen Kühlmittels im Wesentlichen gleich einem Brechungsindex des Prismas ist.

**15.** Bilderzeugungsvorrichtung des Projektionstyps nach Anspruch 7, wobei ein Teil des Elementkühlungsabschnitts, der mit der Anzeigeobertläche des Bildanzeigeelements in Kontakt ist, aus einem elastischen Material gebildet ist.

**Revendications**

**1.** Dispositif d'imagerie d'un type de projection comprenant :

un système optique de source lumineuse (121) pour émettre une lumière source ;
un élément d'affichage d'image (7a, 7b, 7c) ayant une surface d'affichage (127) sur laquelle une pluralité de micromiroirs sont placés, l'élément d'affichage d'image commandant la pluralité des micromiroirs en fonction d'un signal de commande représentant une image prescrite de façon à refléter la lumière source incidente sur la surface d'affichage vers une première direction et une seconde direction différant dans la première direction de façon à obtenir une première lumière (10b) et une seconde lumière (10a), respectivement ;
un système optique de projection (8) pour projeter la première lumière, et
une section de refroidissement (1010),
**caractérisé en ce que** le dispositif d'imagerie d'un type de projection comprend en outre :

un prisme (6) pour transmettre la première lumière et la seconde lumière ; et
une section d'absorption (19) pour absorber la seconde lumière transmise par le prisme ;

dans lequel ledit système otique de projection est disposé pour projeter la première lumière (10b) transmise par le prisme (6) ;
ladite section de refroidissement est arrangé pour refroidir la section d'absorption (19) au moyen d'un réfrigérant fluide (20),
la première lumière (10b) achemine des informations sur l'image prescrite,
le réfrigérant fluide (20) est couplé optiquement au prisme (6) **en ce que** le réfrigérant fluide et le prisme sont positionnés sans avoir une couche d'air entre le réfrigérant fluide (20) et le prisme (6) de telle sorte que la lumière puisse être transmise entre le réfrigérant fluide et le prisme, et
la seconde lumière (10A) atteint la section d'absorption (19) via le réfrigérant fluide (20).

**2.** Dispositif d'imagerie d'un type de projection selon la revendication 1, dans lequel la section de refroidissement comprend un radiateur (245) pour répandre la chaleur du réfrigérant fluide dans l'air autour du dispositif d'imagerie d'un type de projection.

**3.** Dispositif d'imagerie d'un type de projection selon la revendication 2, dans lequel la section de refroidissement comprend en outre une pompe (22) pour faire circuler le réfrigérant fluide par le biais de la section d'absorption et du radiateur, et une conduite (23) formant une voie de circulation du réfrigérant fluide.

**4.** Dispositif d'imagerie d'un type de projection selon la revendication 2, dans lequel des ailettes (37) sont formées sur une surface du radiateur, qui est en contact avec l'air autour du dispositif d'imagerie d'un type de projection, et la section de refroidissement comprend en outre un ventilateur (25) pour remuer l'air autour du radiateur de façon à améliorer l'efficacité du rayonnement.

**5.** Dispositif d'imagerie d'un type de projection selon la revendication 1, dans lequel le réfrigérant fluide est couplé optiquement au prisme via un verre transparent et un adhésif transparent.

**6.** Dispositif d'imagerie d'un type de projection selon la revendication 1, dans lequel la section d'absorption possède une surface pour absorber la seconde lumière, la surface pour absorber la seconde lumière étant noire.

**7.** Dispositif d'imagerie d'un type de projection comprenant :

un système optique d'une source lumineuse (121) pour émettre une lumière source ;
un élément d'affichage d'image (7a, 7b, 7c) ayant une surface d'affichage (127) sur laquelle une image prescrite est affichée en fonction d'un signal de commande, la source lumineuse étant réfléchie par la surface d'affichage de façon à obtenir une lumière d'informations qui achemine des informations sur l'image prescrite ;
un système optique de projection (8) pour projeter la lumière d'informations, et
une section de refroidissement d'un élément (1010) pour refroidir une surface (127) de l'élément d'affichage d'image opposé à la surface d'affichage au moyen d'un réfrigérant fluide (20),
**caractérisé en ce que** le dispositif d'imagerie d'un type de projection comprend en outre
un prisme (6) pour transmettre la lumière d'informations,

dans lequel ledit système optique de projection est arrangé pour projeter la lumière d'informations transmise par le prisme (6) ; et
dans lequel le réfrigérant fluide (20) est couplé optiquement à la surface d'affichage de l'élément d'affichage d'image et du prisme **en ce que** le réfrigérant fluide, la surface d'affichage (127) et le prisme (6) sont positionnés sans avoir une couche d'air entre le réfrigérant fluide (20) et chacun de la surface d'affichage (127) et du prisme (6) de telle sorte que la lumière puisse être transmise entre le réfrigérant fluide et chacun de la surface d'affichage et du prisme, et la section de refroidissement d'un élément refroidit en outre la surface d'affichage de l'élément d'affichage d'image avec le réfrigérant fluide.

**8.** Dispositif d'imagerie d'un type de projection selon la revendication 1 ou 7, comprenant une pluralité d'éléments d'affichage d'image (7a-7c) correspondant aux composants respectifs parmi une pluralité de composants de couleurs primaires, dans lequel le prisme sépare la lumière source en la pluralité de composants de couleurs primaires et combine la lumière d'informations pour chacun des composants de couleurs primaires.

**9.** Dispositif d'imagerie d'un type de projection selon la revendication 7, dans lequel la section de refroidissement d'un élément refroidit en outre les environs de la surface d'affichage de l'élément d'affichage d'image.

**10.** Dispositif d'imagerie d'un type de projection selon la revendication 7, dans lequel la section de refroidissement d'un élément comprend une pompe (22) pour faire circuler le réfrigérant fluide, une conduite (22) formant une voie de circulation du réfrigérant fluide, et un radiateur (29) pour répandre la chaleur du réfrigérant fluide dans l'air autour du dispositif d'imagerie d'un type de projection.

**11.** Dispositif d'imagerie d'un type de projection selon la revendication 3 ou 10, dans lequel la vitesse du flux de circulation du réfrigérant fluide est contrôlée de façon variable en fonction d'une température autour du dispositif d'imagerie d'un type de projection.

**12.** Dispositif d'imagerie d'un type de projection selon la revendication 1 ou 7, dans lequel la section de refroidissement d'un élément est formée d'un matériau métallique.

**13.** Dispositif d'imagerie d'un type de projection selon la revendication 1 ou 7, dans lequel la section de refroidissement d'un élément possède une surface en contact avec le réfrigérant fluide et des ailettes (36) sont formées sur la surface en contact avec le réfrigérant fluide.

**14.** Dispositif d'imagerie d'un type de projection selon la revendication 1 ou 7, dans lequel un indice de réfraction du réfrigérant fluide est sensiblement égal à un indice de réfraction du prisme.

**15.** Dispositif d'imagerie d'un type de projection selon la revendication 7, dans lequel une partie de la section de refroidissement d'un élément, qui est en contact avec la surface d'affichage de l'élément d'affichage d'image, est formée d'un matériau élastique.

# FIG.1

FIG.2

*FIG.3A*

301

7b

127

*FIG.3B*

10a

301

301

10b

122

127

FIG. 4

EP 1 315 028 B1

FIG.5

## FIG.6A

## FIG.6B

*FIG. 7A*

31

30

7b

34

128

21

*FIG. 7B*

33

20

31

34

30

32

21

# FIG.8A

# FIG.8B

# FIG.8C

*FIG.9A*

*FIG.9B*

*FIG.10*

*FIG.11*

EP 1 315 028 B1

## FIG.12

# FIG.13A

# FIG.13B

*FIG. 14A*

46

20

44

48

45

43a

*FIG. 14B*

45

49

46

43a

20

48

44

*FIG.15*

FIG.16

EP 1 315 028 B1

FIG.17

**EP 1 315 028 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 04350623 A
- JP 10319853 A
- JP 10319379 A
- JP 2000206451 A
- JP 11282361 A